# EUROPEAN PATENT SPECIFICATION

(11) **EP 2 836 016 B1**
(45) Date of publication and mention of the grant of the patent: **06.03.2019**
(21) Application number: 13772564.4
(22) Date of filing: 03.04.2013
(51) Int. Cl.: H04W 36/00

(54) **METHOD AND APPARATUS FOR HANDOVER OF PACKET-SWITCHED SERVICE IN WIRELESS COMMUNICATION SYSTEMS**
VERFAHREN UND VORRICHTUNG ZUR ÜBERGABE VON EINEM PAKETVERMITTELTEN DIENST IN DRAHTLOSEN KOMMUNIKATIONSSYSTEMEN
PROCÉDÉ ET APPAREIL POUR UN TRANSFERT DE SERVICE À COMMUTATION DE PAQUETS DANS DES SYSTÈMES DE COMMUNICATION SANS FIL

(30) Priority: 03.04.2012 US 201261619912 P; 05.04.2012 US 201261620970 P; 18.02.2013 US 201361765810 P; 18.02.2013 US 201361766094 P; 21.02.2013 US 201361767729 P; 26.02.2013 US 201361769723 P; 27.02.2013 US 201361770261 P; 02.03.2013 US 201361771837 P
(43) Date of publication of application: 11.02.2015
(73) Proprietor: LG Electronics Inc., Yeongdeungpo-gu Seoul 150-721 (KR)
(72) Inventor: KIM, Laeyoung, Anyang-si Gyeonggi-do 431-080 (KR); KIM, Jaehyun, Anyang-si Gyeonggi-do 431-080 (KR); KIM, Taehyeon, Anyang-si Gyeonggi-do 431-080 (KR); KIM, Hyunsook, Anyang-si Gyeonggi-do 431-080 (KR)
(74) Representative: Frenkel, Matthias Alexander
(86) International application number: PCT/KR2013/002774
(87) International publication number: WO 2013/151332

(56) References cited:
- KR-A- 20110 105 849
- US-A1- 2012 069 817
- ERICSSON ET AL: "Suspend trigger for CS fallback", 3GPP DRAFT; S2-100374, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Shenzhen, China; 20100118 - 20100122, 12 January 2010 (2010-01-12), XP050630485, [retrieved on 2010-01-12]
- "3rd Generation Partnership Project; Technical Specification Group Services and System Aspects; Circuit Switched (CS) fallback in Evolved Packet System (EPS); Stage 2 (Release 10)", 3GPP STANDARD; 3GPP TS 23.272, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V10.7.0, 8 March 2012 (2012-03-08), pages 1-83, XP050555342, [retrieved on 2012-03-08]
- "3rd Generation Partnership Project; Technical Specification Group Services and System Aspects; Architecture enhancements for non-3GPP accesses (Release 10)", 3GPP STANDARD; 3GPP TS 23.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V10.7.0, 8 March 2012 (2012-03-08), pages 1-232, XP050555359, [retrieved on 2012-03-08]
- Antti Toskala ET AL: "LTE Radio Protocols" In: "LTE for UMTS: Evoluation to LTE-Advanced", 4 March 2011 (2011-03-04), John Wiley and Sons, XP055108976, ISBN: 978-0-47-066000-3 pages 141-184, DOI: 10.1002/9781119992943.ch6, * paragraph [6.6.2.9]; figure 6.20 *
- TANAKA, ITSUMA ET AL.: 'CS Fallback Function for Combined LTE and 3G Circuit Switched Service.' 15 December 2009, XP055167064 Retrieved from the Internet: <URL:http://www.nttdocomo.co.jp/english/bin ary/pdf/corporat e/technology/rd/technical,journal/bn/voll 11_3/voll 11_3 013en.pdf> [retrieved on 2009-12-15]
- 'Voice and video calling over LTE.' February 2012, XP055167065 Retrieved from the Internet: <URL:http://www.ericsson.com/res/docs/ whitepapers/WP-Voice-Video-Calling-LTE.pdf>

## Description

### [Technical Field]

The present invention relates to a wireless communication system and, more particularly, to a method and apparatus for handover of a packet-switched service.

### [Background Art]

When a user equipment operating in an access network supporting both circuit switched (CS) services and packet switched (PS) services moves to another access network due to change in radio access technology (RAT) or circuit switched fallback (CSFB), PS services (e.g., bearers) are processed in a manner that the services are suspended, some of the services are dropped, or the quality of service (QoS) is degraded.

If there is another network to which handover of a PS service can be performed without deteriorating the user experience of the PS service, handover of the PS service is preferably performed in the situation as above. However, the operation of handover of a PS service to other access networks in the above situation is not defined in the conventional wireless communication systems. Proposals for supporting handover of the PS service have been suggested. For example, the PS hand over after a suspension of the PS service being determined to be suspended has been proposed (US 2012/069817 A1 (LING XINHUA [CA] ET AL) 22 March 2012). Proposals for triggering suspension of the PS service for the circuit-switched fallback based on a timer (Ericsson et al. "Suspend trigger for CE fallback", 3GPP draft; S2-100374). Also, 3GPP Technical Specification 23.272 (v 10.7.0) discloses detailed procedures for the PS handover.

### [Disclosure]

### [Technical Problem]

An object of the present invention devised to solve the problem lies in a new method for handover of PS services.

It is to be understood that technical objects to be achieved by the present invention are not limited to the aforementioned object and other technical objects which are not mentioned herein will be apparent from the following description to one of ordinary skill in the art to which the present invention pertains.

### [Technical Solution]

A method and a system according to claims 1 and 5, respectively, are presented.

Further disclosed is a method for handover of at least one packet switched (PS) service in a user equipment (UE), including transmitting, to a network node, a message containing information indicating handover of the at least one PS service to a second access network during execution of circuit switched fallback (CSFB) on a first access network, performing the handover of the at least one PS service to the second access network, and performing a voice call according to execution of the CSFB.

In another aspect of the present disclosure, provided herein is a method for supporting handover of at least one packet switched (PS) service in a network node, including receiving, from a user equipment, a message containing information indicating handover of the at least one PS service to a second access network during execution of circuit switched fallback (CSFB) on a first access network, performing the handover of the at least one PS service to the second access network, and performing a voice call according to execution of the CSFB.

In another aspect of the present disclosure, provided herein is a user equipment for handover of at least one packet switched (PS) service, including a transceiver module, and a processor, wherein the processor is configured to transmit, to a network node, a message containing information indicating handover of the at least one PS service to a second access network using the transceiver module during execution of circuit switched fallback (CSFB) on a first access network, perform the handover of the at least one PS service to the second access network, and perform a voice call according to execution of the CSFB.

In another aspect of the present disclosure, provided herein is a network node device for supporting handover of a packet switched (PS) service, including a transceiver module, and a processor, wherein the processor is configured to receive, from a user equipment, a message containing information indicating handover of the at least one PS service to a second access network using the transceiver module during execution of circuit switched fallback (CSFB) on a first access network, perform the handover of the at least one PS service to the second access network, and perform a voice call according to execution of the CSFB.

The following details can be commonly applied to the above aspects of the present invention.

The transmitting of the message may be performed when it is recognized that handover to a target radio access technology (RAT) of the CSFB is not supported for the at least one PS service by the CSFB, or when it is recognized that the second access network is available.

It may be determined, based on whether or not the UE supports a dual transfer mode (DTM) or on at least one of information items received from a network by the UE, that the handover to the target RAT of the CSFB is not supported for the at least one PS service by the CSFB.

The performing of the handover may be implemented without a suspension request or suspension notification for the at least one PS service on the first access network.

A message indicating a result of the handover of the at least one PS service to the second access network may be transmitted to a network node of a radio access technology (RAT) having the UE currently camping thereon.

When the result of the handover is success, the network node having received the message indicating the result of performance of the handover may deliver the message indicating the result of performance of the handover to another network node. When the result of performance of the handover is failure, the network node having received the message indicating the result of performance of the handover may perform a suspension operation for the at least one PS service.

A timer may be initiated by the network node having received the message containing the information indicating the handover.

A suspension operation for the at least one PS service may be performed when the timer expires.

The first access network may be a 3rd generation Partnership Project (3GPP) access network, and the second access network may be a non-3GPP access network.

In the first access network, a source radio access technology (RAT) to start the CSFB may be an evolved-UMTS (Universal Mobile Telecommunications System) terrestrial radio access network (E-UTRAN), and a target RAT may be a GSM (Global System for Mobile Communication)/EDGE (Enhanced Data rates for Global Evolution) radio access network (GERAN) or a UTRAN, the target RAT being a RAT changed due to the CSFB.

The second access network may be a wireless local access network (WLAN).

The CSFB may be CSFB to a GSM (Global System for Mobile Communication)/EDGE (Enhanced Data rates for Global Evolution) radio access network (GERAN) or to a UMTS (Universal Mobile Telecommunications System) terrestrial radio access network (UTRAN), the GERAN not supporting dual transfer mode (DTM) and the UTRAN not supporting the handover of the PS service.

The network node may include at least one of an AAA (Authentication, Authorization and Accounting) proxy server, an AAA proxy, a mobility management entity (MME), an SGSN (serving GPRS (General Packet Radio Service) supporting node), a packet data network-gateway (P-GW), a serving gateway (S-GW), a home subscriber server (HSS), a WLAN AP (access point), a TWAN (trusted WLAN access network) and an ePDG (enhanced packet data gateway).

The above general description and following description of the present invention are exemplarily given to supplement the recitations in the claims.

### [Advantageous Effects]

According to embodiments of the present invention, a new method and apparatus for handover of a PS service may be provided.

It will be appreciated by persons skilled in the art that that the effects that can be achieved from the present invention are not limited to those described above and other effects of the present invention will be more clearly understood from the following detailed description.

### [Description of Drawings]

The accompanying drawings, which are included to provide a further understanding of the invention, illustrate various embodiments of the invention and together with the description serve to explain the principle of the invention.
FIG. 1 is a diagram schematically illustrating an architecture of an evolved packet system (EPS) including an evolved packet core (EPC).
FIG. 2 is a diagram illustrating an EPS architecture for CSFB.
FIG. 3 is a diagram illustrating a CSFB procedure for a mobile originating call (MO call).
FIG. 4 is a diagram illustrating a CSFB procedure for a mobile terminating call (MT call).
FIG. 5 is a diagram illustrating a method for handover of a PS service during execution of the CSFB procedure for the MO call according to one embodiment of the present invention.
FIG. 6 is a diagram illustrating a method for handover of a PS service during execution of the CSFB procedure for the MT call according to one embodiment of the present invention.
FIG. 7 is a diagram illustrating configuration of a user equipment and a network node apparatus according to a preferred embodiment of the present invention.

### [Best Mode]

The embodiments described below are constructed by combining elements and features of the present invention in a predetermined form. The elements or features may be considered selective unless explicitly mentioned otherwise. Each of the elements or features can be implemented without being combined with other elements. In addition, some elements and/or features may be combined to configure an embodiment of the present invention. The sequence of the operations discussed in the embodiments of the present invention may be changed. Some elements or features of one embodiment may also be included in another embodiment, or may be replaced by corresponding elements or features of another embodiment.

It should be noted that specific terms disclosed in the present invention are intended to provide understanding of the present invention and these specific terms may be changed to other forms within the technical scope or spirit of the present invention.

In some cases, known structures and devices may be omitted or block diagrams illustrating only key functions of the structures and devices may be provided, so as not to obscure the concept of the present invention. The same reference numbers will be used throughout this specification to refer to the same or like parts.

Exemplary embodiments of the present invention are supported by standard documents for at least one of wireless access systems including an institute of electrical and electronics engineers (IEEE) 802 system, a 3rd generation partnership project (3GPP) system, a 3GPP long term evolution (LTE) system, an LTE-advanced (LTE-A) system, and a 3GPP2 system. In particular, steps or parts, which are not described in the embodiments of the present invention to prevent obscuring the technical spirit of the present invention, may be supported by the above documents. All terms used herein may be supported by the above-mentioned documents.

The technology described below may be used in various wireless communications systems. For clarity, the following description focuses on 3GPP LTE and 3GPP LTE-A systems. However, the spirit of the present invention is not limited thereto.

Terms used in the present specification are defined below.

UMTS (Universal Mobile Telecommunications System): A global system for mobile communication (GSM)-based third generation mobile communication technology developed by 3GPP.

EPS (Evolved Packet System): A network system including an evolved packet core (EPC), which is a packet switched (PS) core network based on Internet protocol (IP), and an access network such as LTE and UTRAN. EPS is an evolved form of UMTS.

NodeB: A base station of GERAN/UTRAN. The NodeB is installed outdoors and provides coverage of a macro cell scale.

eNodeB: A base station of LTE. The eNodeB is installed outdoors and provides coverage of a macro cell scale.

HNB (Home NodeB): Customer premises equipment (CPE) providing UMTS terrestrial radio access network (UTRAN) coverage. For more details refer to standard document TS 25.467.

HeNB (Home eNodeB): Customer premises equipment (CPE) providing evolved-UTRAN (E-UTRAN) coverage. For more details refer to standard document TS 36.300.

UE (User Equipment): A user device. The UE may be referred to as a terminal, a mobile equipment (ME), a mobile station (MS), etc. In addition, the UE may be a portable device such as a laptop, a cell phone, a personal digital assistant (PDA), a smartphone and a multimedia device or a non-portable device such as a vehicle mounted device. The UE is capable of performing communication through a 3GPP spectrum such as LTE and/or a non-3GPP spectrum such as WiFi and a spectrum for public safety.

RAN (Radio Access Network): A unit including a NodeB, an eNodeB and a radio network controller (RNC) for controlling the NodeB and the eNodeB in a 3GPP network. RAN is present between a UE and a core network and provides connection to the core network.

MME (Mobility Management Entity): A network node of an EPS network which performs functions of mobility management (MM) and session management (SM).

HLR (Home Location Register)/HSS (Home Subscriber Server): Database having subscriber information in a 3GPP network. The HSS may perform functions such as configuration storage, identity management and user state storage.

PDN-GW (Packet Data Network-Gateway)/PGW: A network node of an EPS network that performs functions of UE IP address allocation, packet screening and filtering, charging data collection, etc.

SGW (Serving Gateway): A network node of an EPS network that performs mobility anchor, packet routing, idle mode packet buffering, and a function of triggering an MME to page a UE.

PCRF (Policy and Charging Rule Function): An EPS network node that performs policy decision for dynamically applying the quality of service (QoS) and charging policy which are differentiated as per service flows.

NAS (Non-Access Stratum): An upper stratum of a control plane between a UE and an MME. This is a functional layer for signaling between a UE and a core network and exchanging a traffic message in an LTE/UMTS protocol stack, and the main functions thereof are supporting UE mobility and supporting a session management procedure for establishing and maintaining IP connection between a UE and a PDN GW.

PDN (Packet Data Network): A network in which a server (e.g., a multimedia messaging service (MMS) server, a wireless application protocol (WAP) server, etc.) that supports a specific service is located.

PDN connection: Logical connection between a UE and a PDN, which is expressed by one IP address (one IPv4 address and/or one IPv6 prefix).

APN (Access Point Name): A string indicating or identifying a PDN. A requested service or a network (PDN) is accessed through a PGW and the APN is a name (string) pre-defined in the network in order to find the PGW. For example, the APN may be expressed as internet.mnc012.mcc345.gprs.

AS (Access-Stratum): A layer including a protocol stack between a UE and a radio network or between a UE and an access network and serving to transmit data and a network control signal.

PLMN (Public Land Mobile Network): A network configured for the purpose of providing mobile communication services to individuals. This network may be distinguishably configured as per operators.

CSFB (Circuit Switched FallBack): Fallback of a UE having an E-UTRAN access to a UTRAN/GERAN CS domain access. Various CS domain services such as a voice service may be provided by the CSFB (see standard document 3GPP TS 23.272).

### Evolved Packet Core (EPC)

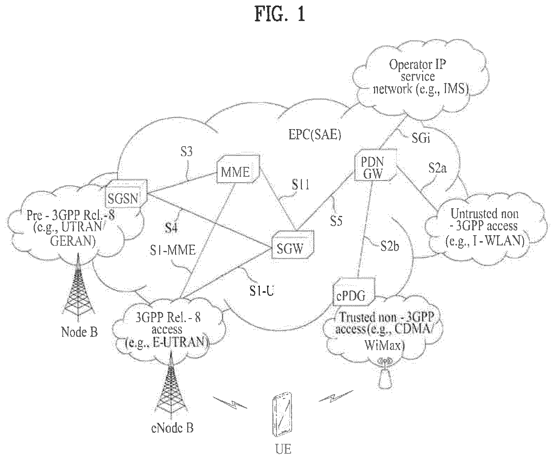

FIG. 1 is a diagram schematically illustrating an architecture of an evolved packet core (EPC).

The EPC is a fundamental element of system architecture evolution (SAE) for improving performance of 3GPP. SAE corresponds to a research project for deciding a network structure supporting mobility between various types of networks. SAE aims to provide an optimized packet-based system which supports various radio access technologies based on IP and provides improved data transfer capabilities.

More specifically, the EPC is a core network of an IP mobile communication system for a 3GPP LTE system and may support packet-based real-time and non-real-time services. In the existing mobile communication system (i.e., a second or third generation mobile communication system), a core network function has been implemented through two distinct sub-domains of a circuit-switched (CS) sub-domain for voice and a packet-switched (PS) sub-domain for data. In a 3GPP LTE system which is evolved from the third generation communication system, however, sub-domains of CS and PS have been unified into one IP domain. That is, in a 3GPP LTE system, connection between UEs having IP capabilities may be configured through an IP-based base station (e.g., an eNodeB (evolved Node B)), an EPC, and an application domain (e.g., an IMS). That is, the EPC is an essential structure for implementation of an end-to-end IP service.

The EPC may include various constituents. FIG. 1 shows a serving gateway (SGW), a packet data network gateway (PDN GW), a mobility management entity (MME), a serving GPRS (general packet radio service) supporting node (SGSN) and an enhanced packet data gateway (ePDG).

The SGW operates as a boundary point between a radio access network (RAN) and a core network and is an element which performs a function of maintaining a data path between an eNodeB and a PDG GW. In addition, if a UE moves over a region served by an eNodeB, the SGW serves as a local mobility anchor point. That is, packets may be routed through the SGW for mobility in an evolved universal terrestrial radio access network (E-UTRAN) defined after 3GPP Release-8. In addition, the SGW may serve as an anchor point for mobility of another 3GPP network (an RAN defined before 3GPP Release-8, e.g., UTRAN or GERAN (global system for mobile communication (GSM)/enhanced data rates for global evolution (EDGE) radio access network).

The PDN GW corresponds to a termination point of a data interface for a packet data network. The PDN GW may support policy enforcement features, packet filtering and charging support. The PDN GW may also serve as an anchor point for mobility management with a 3GPP network and a non-3GPP network (e.g., an untrusted network such as an interworking wireless local area network (I-WLAN) and a trusted network such as a code division multiple access (CDMA) or WiMAX network).

Although the SGW and the PDN GW are configured as separate gateways in the example of the network structure of FIG. 1, the two gateways may be implemented according to a single gateway configuration option.

The MME performs signaling and control functions for supporting access of a UE for network connection, network resource allocation, tracking, paging, roaming and handover (HO). The MME controls control plane functions associated with subscriber and session management. The MME manages numerous eNodeBs and performs signaling for selection of a conventional gateway for HO to other 2G/3G networks. In addition, the MME performs security procedures, terminal-to-network session handling, idle terminal location management, etc.

The SGSN handles all packet data such as mobility management and authentication of a user for other 3GPP networks (e.g., GPRS networks).

The ePDG serves as a security node for an untrusted non-3GPP network (e.g., an I-WLAN, a Wi-Fi hotspot, etc.).

As described with reference to FIG. 1, a UE having IP capabilities may access an IP service network (e.g., an IMS) provided by an operator via various elements in the EPC based on 3GPP access or non-3GPP access.

FIG. 1 also shows various reference points (e.g., S1-U, S1-MME, etc.). In the 3GPP system, a conceptual link connecting two functions present in different functional entities of an E-UTRAN and an EPC is defined as a reference point. Table 1 given below shows the reference points shown in FIG. 1. In addition to the exemplary reference points of Table 1, various reference points may be present according to network structures.

**TABLE 1**

| Reference point | Description |
|---|---|
| S1-MME | Reference point for the control plane protocol between E-UTRAN and MME |
| S1-U | Reference point between E-UTRAN and SGW for user plane tunneling per bearer and inter-eNodeB path switching during handover |
| S3 | Reference point between MME and SGSN that enables user and bearer information exchange for inter-3GPP access network mobility in idle and/or active state. This reference point can be used in or between PLMNs (e.g. in the case of Inter-PLMN HO) |
| S4 | Reference point between SGW and SGSN which provides relevant control and mobility support between GPRS core and the 3GPP Anchor function of SGW. In addition, if a direct tunnel is not established, it provides user plane tunneling. |
| S5 | Reference point for providing user plane tunneling and tunnel management between SGW and PDN GW. This reference point is used for SGW relocation if the SGW needs to be connected to a non-co-located PDN GW due to UE mobility and for the required PDN connectivity. |
| S11 | Reference point between MME and SGW |
| SGi | Reference point between the PDN GW and the PDN. The PDN may be an operator external public or private packet data network or an intra operator packet data network, e.g. for provision of IMS services. This reference point corresponds to Gi for 3GPP access. |

Among the reference points shown in FIG. 1, S2a and S2b correspond to a non-3GPP interface. S2a is a reference point for providing associated control between the trusted non-3GPP access and the PDNGW and mobility support to a user plane. S2b is a reference point providing associated control between the ePDG and the PDN GW and mobility support to a user plane.

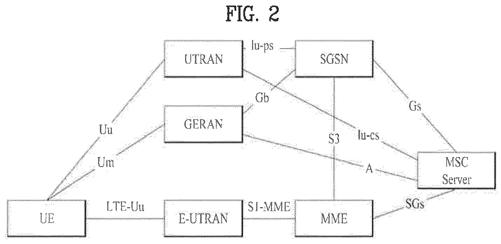

FIG. 2 is a diagram illustrating an EPS architecture for CSFB.

In FIG. 2, the SGs interface is an interface defined for CSFB between an MSC server and an MME and is used for the operations of mobility management and paging between the EPS domain and the CS domain. The MSC server may be referred to as an MSC. For details, refer to standard document 3GPP TS 23.272.

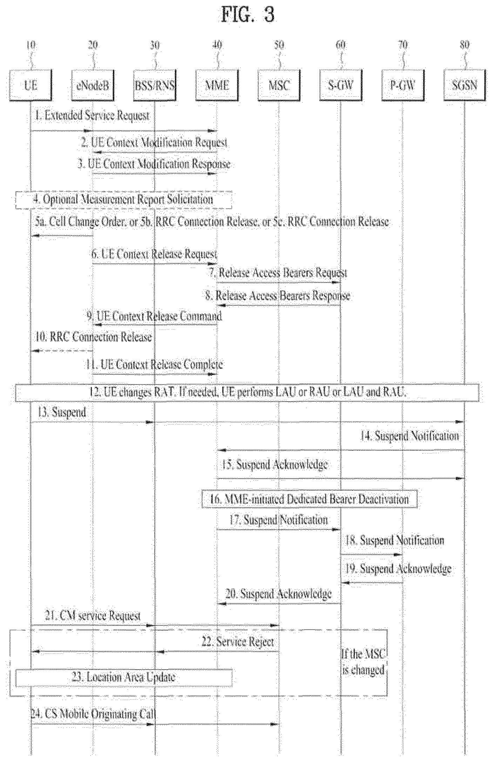

FIG. 3 is a diagram illustrating a CSFB procedure for a mobile originating call (MO call).

The MO call represents a call transmitted by a UE. The CSFB procedure for the MO call may be performed in the cases of, for example, a call on a GERAN/UTRAN on which PS HO for PS services is not supported and a call request on an E-URTAN. The exemplary CSFB procedure of FIG. 3 represents the operation of changing the radio access technology (RAT) to a GERAN or UTRAN to initiate an MO voice call when the UE, which is in active mode and camps on the E-UTRAN, makes a call request.

Herein, it is assumed that PS HO to a target RAT which the UE is to camp on is not supported for the PS services. For example, if the target RAT is a GERAN, a case in which the UE does not support dual transfer mode (DTM) and/or a case in which the target network does not support DTM may correspond to the case in which PS HO is not supported. In addition, if the target RAT is a UTRAN, the target network may not support PS HO.

In step 1 of FIG. 3, a UE 10 may transmit an Extended Service Request message to an MME 40 via an eNodeB 20 to start the CSFB procedure for an MO call. The Extended Service Request message may include information signaling an MO CSFB request.

Herein, the UE 10 may perform a combined EPS/IMSI (International mobile subscriber identity) attachment operation to receive a CSFB service, thereby being attached not only to the EPS domain but also to the CS domain. That is, the MME 40 may have registered the UE 10 in an MSC 50 of the CS domain through the SGs interface. For details of the combined EPS/IMSI attachment operation, refer to standard document 3GPP TS 23.272.

In step 2 of FIG. 3, the MME 40 may transmit a UE Context Modification Request message to the eNodeB 20. The UE Context Modification Request message may include CSFB indicator information. Through the CSFB indicator information, the eNodeB 20 may recognize that the UE 10 needs to change the RAT to a GERAN/UTRAN for CSFB. The UE Context Modification Request message may also include a location area identity (LAI) of the CS domain in which the UE 10 is registered.

In step 3 of FIG. 3, the eNodeB 20 may transmit a UE Context Modification Response message to the MME 40 in response to the received UE Context Modification Request message.

In step 4 of FIG. 3, the eNodeB 20 may solicit a measurement report from the UE 10 to determine a target GERAN/UTRAN cell to which the UE 10 is to be redirected. Execution of step 4 may be optional.

In step 5 of FIG. 3, the eNodeB 20 may perform one of steps 5a, 5b and 5c.

Step 5a of FIG. 3 is a step in which the eNodeB 20 transmits a radio resource control (RRC) message to the UE 10 to allow the UE 10 to perform the inter-RAT cell change order to a GERAN neighbor cell in the case that the target cell is a GERAN, and both the UE 10 and the network support the inter-RAT cell change order.

Step 5b of FIG. 3 is a step in which the eNodeB 20 performs RRC connection release with redirection to GERAN or RRC connection release with redirection to UTRAN in the case in which one of the UE 10 and the network supports neither inter-RAT PS HO from E-UTRAN to GERAN/UTRAN nor the inter-RAT cell change order to GERAN.

In step 5c of FIG. 33, the eNodeB 20 including one or more physical cell identities and system information associated with the identities performs RRC connection release with redirection to GERAN or RRC connection release with redirection to UTRAN in the case in which the UE 10 and the network support RRC connection release with redirection and multi cell system information to GERAN/UTRAN.

In step 6 of FIG. 3, the eNodeB 20 may transmit a UE Context Release Request message to the MME 40. If the target cell is a GERAN and at least one of the target cell and the UE 10 does not support the DTM, the UE Context Release Request message may include information indicating that the PS service is available to the UE 10 in the target cell.

In step 7 of FIG. 3, the MME 40 may transmit a Release Access Bearers Request message to an S-GW 60. Thereby, the S-GW 60 may release all S1-U bearers (i.e., bearers between the S-GW and the eNodeB) associated with the UE 10.

In step 8 of FIG. 3, the S-GW 60 may transmit a Release Access Bearers Response message to the MME 40 after releasing all information associated with the eNodeB 20 (e.g., an address of the eNodeB, a tunnel endpoint ID (TEID), etc.) for the UE 10. As a result of execution of step 8, other context information about the UE 10 stored in the S-GW 60 remains unaffected by such execution. For details of the UE context information stored in the S-GW, section 5.7.3 of standard document 3GPP TS 23.401 may be referenced.

In step 9 of FIG. 3, the MME 40 may send a UE Context Release Command message to the eNodeB 20, thereby releasing S1.

In step 10 of FIG. 3, if the RRC connection is not yet released, the eNodeB 20 may transmit an RRC Connection Release message to the UE 10. When the RRC Connection Release message is acknowledged by the UE 10, the eNodeB 20 deletes the UE context information.

In step 11 of FIG. 3, the eNodeB 20 may transmit a UE Context Release Complete message to the MME 40, confirming release of S1. Thereby, signaling connection between the MME 40 for the UE 10 and the eNodeB 20 may be released. Step 11 may be performed immediately after step 9.

In step 12 of FIG. 3, the UE 10 may perform one of steps 12a, 12b and 12c. Step 12a is performed in the case in which step 5a is performed. Step 12b is performed in the case in which step 5b is performed. Step 12c is performed in the case in which step 5c is performed.

In step 12a of FIG. 3, the UE 10 may perform RAT change to a new cell of the GERAN and establish a radio signaling connection.

In step 12b of FIG. 3, the UE 10 may perform RAT change to a target RAT and establish a radio signaling connection.

In step 12c of FIG. 3, the UE 10 may perform RAT change to the target RAT and establish a radio signaling connection using the multi cell system information.

After the UE 10 performs one of steps 12a, 12b and 12c, the UE 10 may perform location area update in the case in which the location area (LA) stored in the UE 10 is different from the LA of a new cell. In addition, the UE 10 may determine whether routing area update (RAU) needs to be performed (for details of this operation, standard document 3GPP TS 23.060 may be referenced), and may perform RAU if RAU is necessary.

In step 13 of FIG. 3, if the target RAT is a GERAN, and the UE 10 or the target cell does not support the DTM, the UE 10 may transmit a Suspend message to an SGSN 80 via a BSS (Base Station Subsystem)/RNS(Radio Network Subsystem) 30.

In step 14 of FIG. 3, upon receiving the Suspend message, the SGSN 80 may transmit a Suspend Notification message to the MME 40. The Suspend Notification message may also be used as a Suspend Request message.

In step 15 of FIG. 3, the MME 40 may transmit a Suspend Acknowledge message to the SGSN 80 in response to the Suspend Notification message. The Suspend Acknowledge message may also be used as a Suspend Response message.

If the UE Context Release Request message that the MME 40 has received from the eNodeB 20 in step 6 contains information for the UE 10 which indicates that the PS service is not available in the target cell, steps 16 and 17 may be performed when the MME 40 receives the Suspend Notification message from the SGSN 80.

In step 16 of FIG. 3, the MME 40 may perform MME-initiated dedicated bearer deactivation. Thereby, the S-GW 60 and a P-GW 70 may deactivate guaranteed bit rate (GBR) bearer(s). For details of the MME-initiated Dedicated Bearer Deactivation operation, standard document 3GPP TS 23.401 may be referenced.

In step 17 of FIG. 3, the MME 40 may transmit a Suspend Notification message to the S-GW 60, thereby performing preservation and suspension of non-GBR bearer(s).

In step 18 of FIG. 3, the S-GW 60 having received the Suspend Notification message sent from the MME 40 may transmit the Suspend Notification message to the P-GW(s) 70.

In step 19 of FIG. 3, the P-GW 70 may transmit a Suspend Acknowledge message to the S-GW 60 in response to the Suspend Notification message.

In step 20 of FIG. 3, the S-GW 60 may transmit the Suspend Acknowledge message to the MME 40.

As a result of preservation and suspension of the non-GBR bearer(s) performed in steps 17 to 20 of FIG. 3, the MME 40 may store information indicating that the UE 10 is suspended in the UE context information. In addition, all preserved non-GBR bearer(s) are indicated as being suspended in the S-GW 60 and the P-GW 70. In addition, when the P-GW 70 receives a packet directed to the suspended UE 10, it discards the packet.

In step 21 of FIG. 3, the UE 10 may transmit a connection management (CM) service Request message for MO call setup to the MSC 50 via the BSS/RNS 30.

In the case in which the MSC is changed, or the UE 10 is not allowed in the location area, the service request from the UE 10 may be rejected. Thereby, steps 22 and 23 may be performed.

In step 22 of FIG. 3, the MSC 50 may transmit a message for rejecting the service request for MO call setup made by the UE 10 to the UE 10 via the BSS/RNS 30.

In step 23 of FIG. 3, the UE 10 having received the Service Reject message from the MSC 50 may perform LAU or combined RAU/LAU based on the network modes of operation (NMO).

In step 24 of FIG. 3, the UE 10 completes the MO call setup. In the case in which steps 22 and 23 are performed, the UE 10 may transmit the CM service Request message to a new MSC 50. Thereby, the MO call setup may be completed, and the UE 10 may perform a voice call (i.e., voice communication).

If the UE 10 is present on the GERAN and the PS service is in the suspended state when the voice call conducted by the UE 10 according to the CSFB procedure for the MO call is terminated, the UE 10 may resume the PS service. For example, the UE 10 may resume the PS service by performing RAU or combined RAU/LAU. Thereby, the SGSN 80 may resume the PS service and inform the S-GW 60 and the P-GW 70 that the suspended bearer(s) will be resumed.

Alternatively, in the case in which the UE 10 returns to the E-UTRAN after the voice call is terminated, the UE 10 may transmit a tracking area update (TAU) request message to the MME 40, thereby resuming the PS service. Thereby, the MME 40 may resume the PS service and inform the S-GW 60 and the P-GW 70 that the suspended bearer(s) will be resumed.

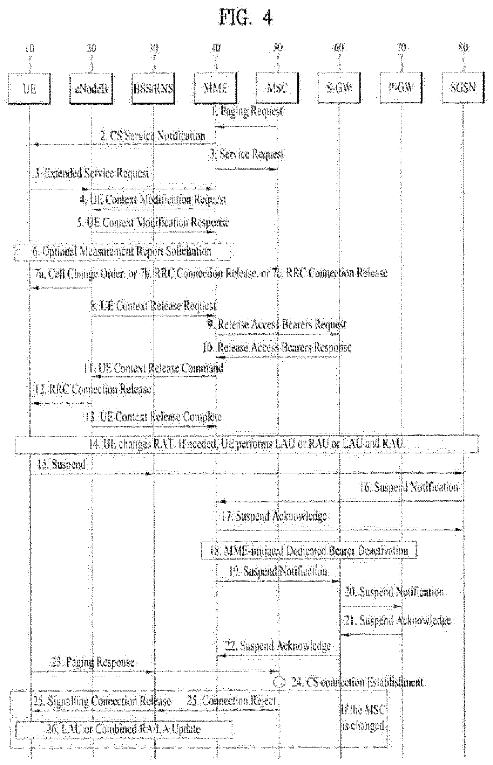

FIG. 4 is a diagram illustrating a CSFB procedure for a mobile terminating call (MT call).

The MT call represents a call received by a UE. The CSFB procedure for the MT call may be, for example, a procedure for a call on a GERAN/UTRAN on which PS HO is not supported or CS paging on an E-UTRAN. The exemplary CSFB procedure of FIG. 4 represents the operation of changing the RAT to a GERAN or UTRAN to initiate an MT voice call when an incoming call occurs to the UE in an active mode that camps on the E-UTRAN.

Herein, it is assumed that PS HO to a target RAT which the UE is to camp on is not supported for the PS services. For example, if the target RAT is a GERAN, a case in which the UE does not support dual transfer mode (DTM) and/or a case in which the target network does not support DTM may correspond to the case in which PS HO is not supported. In addition, if the target RAT is a UTRAN, the target network may not support the PS HO.

In step 1 of FIG. 4, the MSC 50 receives an incoming voice call directed to the UE 10. The MSC 50 transmits a Paging Request message to the MME 40 using the SGs interface.

Herein, the UE 10 may perform a combined EPS/IMSI attachment operation to receive a CSFB service, thereby being attached not only to the EPS domain but also to the CS domain. That is, the MME 40 may have registered the UE 10 in an MSC 50 of the CS domain through the SGs interface. For details of the combined EPS/IMSI attachment operation, refer to standard document 3GPP TS 23.272.

In step 2 of FIG. 4, the MME 40 transmits a CS Service Notification message to the UE 10 to inform the UE 10 of an MT voice call. In addition, the MME 40 transmits, to the MSC 50, a Service Request message containing information indicating that the UE 10 is in the connected mode.

In step 3 of FIG. 4, the UE 10 may transmit an Extended Service Request message to the MME 40 via the eNodeB 20 to start the CSFB procedure for the MT call. The Extended Service Request message includes information indicating that the request is an MT CSFB request.

Steps 4 to 22 of FIG. 4 are the same as steps 2 to 20 of FIG. 3, and thus description thereof will be omitted.

In step 23 of FIG. 4, if the UE 10 has not initiated LAU, the UE 10 transmits a Paging Response message to the MSC 50 via the BSS/RNS 30.

In step 24 of FIG. 4, if the UE 10 is registered in the MSC 50, and the UE 10 is allowed in a corresponding location area, the MSC 50 establishes a CS call.

In the case in which the MSC is changed or the UE 10 is not allowed in the location area, steps 25 and 26 may be performed.

In step 25 of FIG. 4, the MSC 50 releases the A/Iu-cs connection, thereby rejecting the Paging Response sent from the UE 10. The BSS/RNS 30 in turn releases the signaling connection for the CS domain.

In step 26 of FIG. 4, the UE 10 may perform LAU or combined RAU/LAU based on the NMO according to the signaling connection release of step 25. After LAU is performed, the MSC 50 may establish a CS call for the UE 10.

Once the CS call setup is completed as a result of step 24 or 26, the UE 10 may perform a voice call (i.e., voice communication).

If the UE 10 is present on the GERAN and the PS service is in the suspended state when the voice call conducted by the UE 10 according to the CSFB procedure for the MT call, the UE 10 may resume the PS service. For example, the UE 10 may attempt to resume the PS service by performing RAU or combined RAU/LAU. Thereby, the SGSN 80 may resume the PS service and inform the S-GW 60 and the P-GW 70 that the suspended bearer(s) will be resumed.

Alternatively, in the case in which the UE 10 returns to the E-UTRAN after the voice call is terminated, the UE 10 may transmit a TAU request message to the MME 40, thereby resuming the PS service. Thereby, the MME 40 may resume the PS service and inform the S-GW 60 and the P-GW 70 that the suspended bearer(s) will be resumed.

### Improved PS HO procedure

In the case in which PS service HO to a target RAT that the UE is to camp on is not supported in the CSFB procedure illustrated in FIGs. 3 and 4, while the UE performs a voice call, the UE cannot receive a PS service since the PS service is suspended. That is, according to the conventionally defined CSFB operation, even if there is access (e.g., WLAN access of the non-3GPP accesses) for PS connection available to the UE, the access for the PS connection cannot be utilized. Accordingly, user experience of a service may be deteriorated and the overall performance of the network may be lowered.

To solve this problem, the present invention proposes an improved method for performing PS HO in a UE. More specifically, the present invention proposes a method for efficiently supporting PS HO between a 3GPP access network (e.g., a GERAN/UTRAN/E-UTRAN) and a WLAN (i.e., WiFi).

The proposed method for PS HO may be exemplarily applied to the following scenarios. For example, the proposed method for PS HO may be applied to scenarios such as inter-RAT PS HO (e.g., a case in which WiFi access is preferred to R99 but not to HSPA in handover from HSPA to R99 cells), intra-RAT PS HO, CSFB to GERAN which does not support the dual transfer mode (DTM) (for example, a situation of suspension of a PS service may be addressed when a UE performs handover of the PS service suspended due to CSFB to WiFi), or CSFB to a UTRAN which does not support PS HO (for example, a situation of suspension of a PS service may be addressed when a UE performs handover of the PS service suspended due to CSFB to WiFi). The above scenarios are merely illustrative, and the proposed method may be applied to various other scenarios requiring PS HO in a situation in which a UE receiving PS services over a cellular access network can use WiFi (i.e., a case in which the UE has already accessed WiFi or can access WiFi).

Hereinafter, for clarity of description, proposed methods will be separately described. However, one or more of the methods described below can be combined.

The present invention proposes a method for informing of information about handover of a PS service over a network for an MO voice call or MT voice call while a UE is performing CSFB, which is described below. As a representative example of HO of a PS service, HO of a PS service provided over a first access network (e.g., an E-UTRAN) to a second access network (e.g., a WLAN) will be described. However, the scope of the present invention is not limited thereto. The proposed principle of the present invention may be equally applied to the case in which a PS service is subjected to HO from a 3GPP access network to a non-3GPP access network.

### Method 1

When the CSFB procedure begins (or when a UE recognizes that the CSFB procedure begins, or initiates the CSFB procedure), the UE may recognize that a PS service will be suspended (or PS HO to a target RAT of CSFB will not be supported/performed) due to CSFB. In this case, the UE may determine that handover of the PS service to WLAN (or WiFi) will be performed.

Herein, in the case in which the UE recognizes that a PS service will be suspended due to CSFB (or that PS HO to a target RAT of CSFB will not be supported/performed) when the CSFB procedure begins (or when a UE recognizes that the CSFB procedure begins, or initiates the CSFB procedure), the determination may be made based on the capabilities of the UE. For example, in the case in which the UE does not support the dual transfer mode (DTM), the UE may determine that the PS service will be suspended due to CSFB.

In addition, a case in which the UE determines to perform handover of the PS service may be a case in which the UE recognizes presence of available WiFi (or accessible WiFi) for the PS service.

Additionally, the UE may determine whether to conduct HO of the PS service based on a predetermined policy or configuration related to access network selection. For example, the UE may determine whether to conduct HO of the PS service to WiFi based on a policy/configuration instructing HO of the PS service to WiFi or a policy/configuration indicating that WiFi has higher priority than GERAN/UTRAN for the PS service.

According to the examples of the present invention as above, the UE may determine to perform HO of the PS service to WiFi during CSFB (i.e., when the CSFB procedure starts), based on the capabilities of the UE, availability of WiFi, or one of information items received from the network or a combination of two or more of the received information items.

In the case in which the UE determines to perform HO of the PS service to WiFi during CSFB (i.e., when the CSFB procedure begins), the UE may perform at least one of the following operations.
(1) When the UE transmits an Extended Service Request message to an MME, it may cause the message to carry information notifying that PS service (bearer(s) or PDN connection(s)) is selectively subjected to HO to WiFi. The notifying information may be explicit information (e.g., information explicitly indicating HO of the PS service to WiFi) or implicit information (e.g., information indicating that WiFi is preferred to the target RAT of CSFB, information about preferences or priorities of all RATs available to the UE, information indicating that WiFi is available, etc.).
(2) The UE continuously performs the CSFB procedure and at the same time performs HO of the PS service to WiFi. The UE may have already accessed the handover target access network (i.e., WiFi) or may find available WiFi and performs the access procedure.
(3) During the CSFB procedure, the UE does not transmit the Suspend message (step 13 of FIG. 3 or step 15 of FIG. 4) transmitted to a target SGSN. That is, the UE does not perform an operation for suspension of the PS service during CSFB.
(4) If HO of the PS service to WiFi is successfully completed while the UE is still camping on the E-UTRAN, the UE transmits a message including information indicating completion of HO of the PS service to WiFi to the MME. If HO of the PS service to WiFi fails while the UE is still camping on the E-UTRAN, the UE transmits a message including information indicating failure of HO of the PS service to WiFi to the MME.
(5) If HO of the PS service to WiFi is successfully completed after the UE camps on the target RAT (e.g., GERAN), the UE transmits a message including information indicating completion of HO of the PS service to WiFi to the SGSN. If HO of the PS service to WiFi fails after the UE camps on the target RAT (e.g., GERAN), the UE transmits a message including information indicating failure of HO of the PS service to WiFi to the SGSN. As the message transmitted from the UE to the SGSN, a message (e.g., a RAU request message) which the UE transmits to the SGSN in the conventional CSFB procedure may be used, or a new message which has not been conventionally defined may be defined and used.
(6) In operation (5), HO of the PS service to WiFi may be successfully completed or fail after the UE completes the CSFB procedure, or while the UE is performing CSFB.

Upon receiving the message including the information indicating that HO of the PS service to WiFi is successfully completed in operations (4) and (5), the MME or SGSN informs other relevant network nodes of this information. For example, the MME may deliver the received information to the target SGSN and the S-GW, and the S-GW may in turn deliver the received information to the P-GW. The SGSN may deliver the received information to the MME, the MME may in turn deliver the information to the S-GW, and the S-GW may in turn deliver the information to the P-GW.

Upon receiving the message including the information indicating that HO of the PS service to WiFi has failed in operations (4) and (5), the MME or SGSN may perform the suspension operation for the PS service. For example, the MME transmits the Suspend Request message to the target SGSN and the S-GW to request suspension of the PS service for the UE, and the S-GW makes a request for suspension to the P-GW. The SGSN transmits the Suspend Request message to the MME to request suspension of the PS service for the UE, the MME makes a request for suspension to the S-GW, and the S-GW makes a request for suspension to the P-GW. These operations may include PS service-related operations (steps 14 to 20 of FIG. 3 and steps 16 to 22 of FIG. 4) performed on the network after the UE receives the Suspend message transmitted to the SGSN in step 13 of FIG. 3 or step 15 of FIG. 4.

The MME having received the information notifying HO of the PS service to WiFi in operation (1) may start/run/turn on a timer. When the started timer expires, the MME may perform the operation of suspension of the PS service for the UE based on the predetermined policy. That is, the MME transmits the Suspend Request message to the target SGSN and the S-GW to request suspension of the PS service for the UE, and the S-GW makes a request for the suspension to the P-GW. If the MME receives the message including the information indicating completion/failure of handover described in operation (4) or receives a Handover Completed or Suspension Request message from the SGSN before the started timer expires, the MME may perform the operation of delivering the corresponding information to other network nodes as described in operation (4).

### Method 2

The UE may recognize, from the information received from the network during the CSFB procedure, that the PS service will be suspended (or PS HO to the target RAT of CSFB will not be supported/performed). In this case, the UE may determine to perform HO of the PS service to WLAN (or WiFi).

The case in which the UE determines to perform HO of the PS service may be a case in which the UE recognizes presence of available WiFi (or accessible WiFi) for the PS service. Additionally, the UE may determine whether to conduct HO of the PS service based on a predetermined policy or configuration related to access network selection. For example, the UE may determine whether to conduct HO of the PS service to WiFi based on a policy/configuration instructing HO of the PS service to WiFi or a policy/configuration indicating that WiFi has a higher priority than GERAN/UTRAN for the PS service.

In the case in which the UE determines to perform HO of the PS service to WiFi during CSFB (i.e., when the CSFB procedure begins) based on the information received from the network, the UE may perform at least one of the following operations.
(1) When the UE receives, from the network, information indicating that the PS service will be suspended (or PS HO will not be supported/performed), the UE may transmit, to the MME, a message containing information notifying that PS service (bearer(s) or PDN connection(s)) is selectively subjected to HO to WiFi. Herein, the information indicating that the PS service will be suspended may be information explicitly indicating the fact of suspension or information implicitly indicating the fact by indicating other information. The information through which the UE notifies the MME of HO of the PS service may be explicit information (e.g., information explicitly indicating HO of the PS service to WiFi) or implicit information (e.g., information indicating that WiFi is preferred to the target RAT of CSFB, information about preferences or priorities of all RATs available to the UE, information indicating that WiFi is available, etc.).

Operations (2) to (6) of the UE according to Method 2 are the same as operations (2) to (6) of Method 1, and thus description thereof will be omitted.

In Methods 1 and 2, the UE may recognize that a voice service is provided through CSFB according to the following scheme.

For example, when a UE having a CSFB capability is attached to a network, the Attach Request message may include information indicating that the UE request a combined EPS/IMSI attachment (i.e., attachment not only to the EPS but also to the CS domain) and information indicating that the UE has the CSFB capability and the CSFB is set to be used. Thereby, when the UE receives, from the MME, an Attach Accept message including result information indicating that the combined EPS/IMSI attachment has been performed, the UE may recognize that a voice service is provided through CSFB.

In addition, the UE may also recognize that a voice service is provided through CSFB when the UE performs the TAU operation for the network. For example, a TAU Request message that the UE transmits to the MME may contain the information indicating that the request is a combined TAU/LAU request or a combined TAU/LAU request with IMSI attachment. Thereby, when the UE receives, from the MME, a TAU Accept message including result information indicating that the combined TAU/LAU has been completed, the UE may recognize that a voice service is provided through CSFB.

The UE may start or recognize start of CSFB for an MO voice call by transmitting an Extended Service Request message to the MME.

In addition, the UE may recognize start of CSFB for the MT voice call by receiving CS paging from the MME/eNodeB (i.e., in the case in which the core network domain information contained in the paging message is CS) if the UE is in an idle mode, or by receiving a CS Service Notification message from the MME if the UE is in the active mode.

In addition, the UE may recognize presence of available WiFi (or accessible WiFi) by receiving, from WiFi access point(s) (or WLAN access network(s)), a signal (e.g., a beacon frame, a beacon signal or a beacon message) informing thereof. The UE may also recognize that WiFi is available, in the case in which the UE has already accessed WiFi.

In the proposed methods of the present invention, a case in which the UE performs handover of all PS services to WiFi during the CSFB procedure (i.e., after the CSFB procedure starts) has been exemplarily described. The proposed principle of the present invention can be equally applied to a case in which handover to WiFi is performed for only one or more PS service (bearer(s) or PDN connection(s)) of a plurality of PS services.

In addition, in the proposed methods of the present invention, handover of PS services between a 3GPP access network and a WLAN has been mainly described. However, the scope of the present invention is not limited thereto. The proposed principle of the present invention can be equally applied to handover of PS services between a 3GPP access network and a non-3GPP access network (WiMax, 3GPP2 access network, etc. in addition to the above-described WLAN).

Hereinafter, embodiments of the present invention according to the various methods discussed above will be described. However, the scope of the present invention is not limited to the following embodiments and also covers an embodiment configured by a combination of one or more of the aforementioned methods.

### Embodiment 1

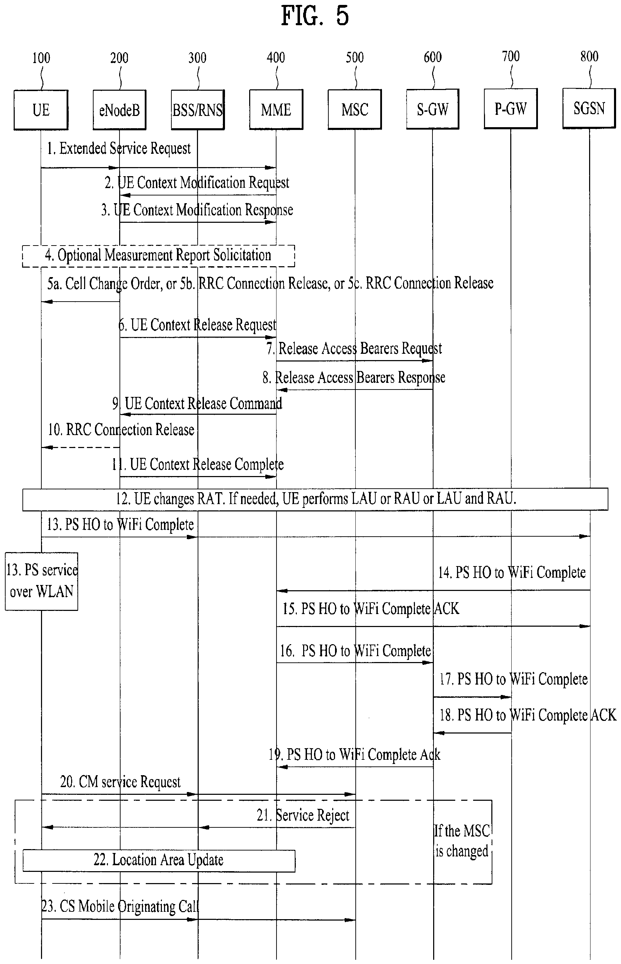

FIG. 5 is a diagram illustrating a method for handover of a PS service during execution of the CSFB procedure for the MO call according to one embodiment of the present invention.

In FIG. 5, a UE 100 is attached not only to the EPS domain but also to the CS domain by performing the combined EPS/IMSI attachment operation to receive a CSFB service.

In step 1 of FIG. 5, the UE 100 transmits an Extended Service Request message containing information indicating request for MO CSFB to an MME 400 to start the CSFB procedure for the MO call. The message is delivered to the MME 400 via an eNodeB 200. At this time, the UE 100 may recognize that a PS service will be suspended (or PS HO will not be supported/performed) due to CSFB. Thereby, when the UE recognizes presence of available WiFi (or accessible WiFi), it may cause the Extended Service Request message to carry information notifying that the PS service is selectively subject to handover to WiFi. As a result, the UE 100 may continue to perform the remaining CSFB procedure and perform handover of a PS service provided on E-UTRAN to WiFi simultaneously (i.e., in parallel).

Steps 2 to 12 of FIG. 5 are the same as steps 2 to 12 of FIG. 3, and thus description thereof will be omitted.

While steps 1 to 12 of FIG. 5 are performed (namely, while the CSFB procedure is performed), the UE 100 may perform handover of the PS service to WiFi. For example, the UE 100 being provided with one or more PS services through a S-GW 600 and a P-GW 700 may find a non-3GPP access network (e.g., a WLAN) and perform the access authentication process for the non-3GPP access network to initiate handover, and the non-3GPP access network may perform an authentication procedure for an AAA server (or an AAA proxy for roaming). When the authentication is completed, the UE 100 may attempt attachment to the non-3GPP access network and the non-3GPP access network may perform proxy binding update for the P-GW 700. As a result, the attachment may be completed. For details of the procedure of handover from a 3GPP access network to a non-3GPP access network, refer to standard document 3GPP TS 23.402.

In step 13 of FIG. 5, when the UE 100 completes handover of the PS service to WiFi, the UE 100 transmits a PS HO to WiFi Complete message to an SGSN 800. After completing handover of the PS service to WiFi, the UE 100 is provided with the PS service using the WLAN.

In step 14 of FIG. 5, the SGSN 800 having received the PS HO to WiFi Complete message transmits the PS HO to WiFi Complete message to the MME 400.

In step 15 of FIG. 5, the MME 400 sends a PS HO to WiFi Complete ACK (acknowledgement) message to the SGSN 800 in response.

The MME 400 having received the PS HO to WiFi Complete message from the SGSN 800 recognizes that the PS service has been handed over to WiFi although the UE Context Release Request message received in step 6 includes information indicating that the PS service is not available to the UE on the target RAT (e.g., GERAN).

In step 16 of FIG. 5, the MME 400 transmits the PS HO to WiFi Complete message to the S-GW 600. Thereby, the S-GW 600 recognizes that the PS service has been handed over to WiFi.

In step 17 of FIG. 5, the S-GW 600 transmits the PS HO to WiFi Complete message to the P-GW 700. Thereby, the P-GW 700 recognizes that the PS service has been handed over to WiFi.

In step 18 of FIG. 5, the P-GW 700 sends a PS HO to WiFi Complete ACK message to the S-GW 600 in response.

In step 19 of FIG. 5, the S-GW 600 sends the PS HO to WiFi Complete ACK message to the MME 400 in response.

In step 20 of FIG. 5, the UE 100 may transmit a connection management (CM) service Request message for MO call setup to an MSC 500 via a BSS/RNS 300. Step 20 of FIG. 5 may be performed between steps 12 and 13.

Steps 21 to 23 of FIG. 5 are the same as steps 22 to 24 of FIG. 3, and thus description thereof will be omitted.

After the UE 100 completes MO call setup the UE 10 may perform a voice call (i.e., voice communication) and at the same time be provided with the PS service using the WLAN.

In the example illustrated in FIG. 5, when the CSFB procedure begins (or when the UE 100 recognizes that the CSFB procedure begins, or initiates the CSFB procedure), the UE may recognize that the PS service will be suspended (or PS HO to a target RAT of CSFB will not be supported/performed) due to CSFB in step 1. When the UE 100 recognizes presence of available WiFi (or accessible WiFi), the UE initiates handover of the PS service to WiFi.

In the case in which the UE 100 recognizes that that the PS service will be suspended (or PS HO will not be supported/performed by the target RAT of CSFB) due to CSFB from the information received from the network during the CSFB procedure and recognizes presence of available WiFi (or accessible WiFi), the UE 100 may initiate handover of the PS service provided on the E-UTRAN to WiFi after steps 5a/5b/5c. At this time, the UE 100 may transmit, to the MME 400, a message containing information for notifying that handover of the PS service to WiFi is selectively performed. To this end, the conventionally defined NAS message may be used, or a new message may be defined and used.

### Embodiment 2

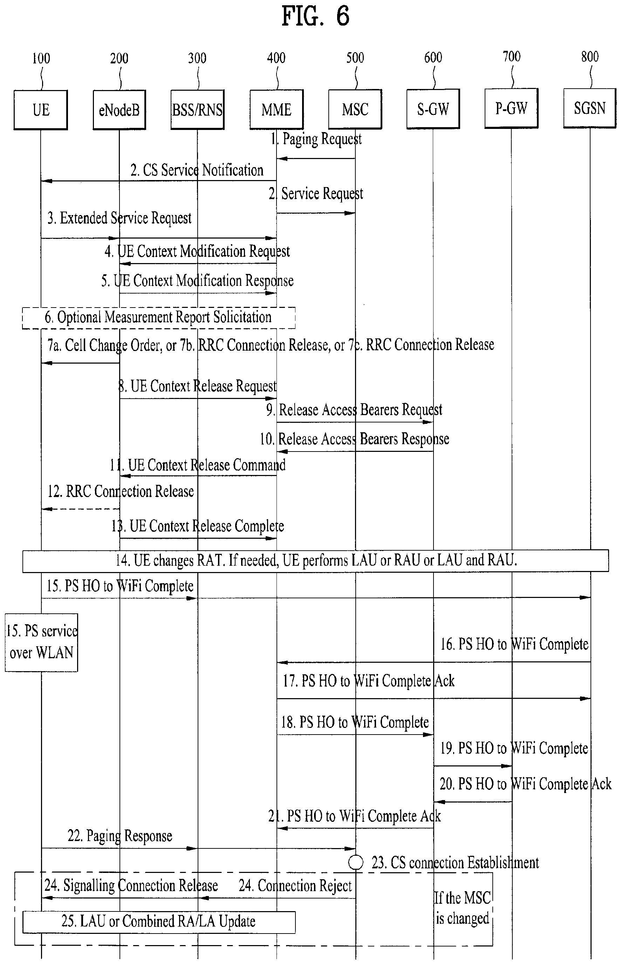

FIG. 6 is a diagram illustrating a method for handover of a PS service during execution of the CSFB procedure for the MT call according to one embodiment of the present invention.

In FIG. 6, the UE 100 is attached not only to the EPS domain but also to the CS domain by performing the combined EPS/IMSI attachment operation to receive a CSFB service.

Steps 1 and 2 of FIG. 6 are the same as steps 1 and 2 of FIG. 4, and thus description thereof will be omitted.

In step 3 of FIG. 6, the UE 100 transmits an Extended Service Request message containing information indicating request for MT CSFB to the MME 400 to start the CSFB procedure for the MT call. The message is delivered to the MME 400 via the eNodeB 200. At this time, the UE 100 may recognize that a PS service will be suspended (or PS HO will not be supported/performed) due to CSFB. Thereby, when the UE recognizes presence of available WiFi (or accessible WiFi), it may cause the Extended Service Request message to carry information notifying that the PS service is selectively subjected to handover to WiFi. As a result, the UE 100 may continue to perform the remaining CSFB procedure and perform handover of a PS service provided on E-UTRAN to WiFi simultaneously (i.e., in parallel).

Steps 4 to 14 of FIG. 6 are the same as steps 4 to 14 of FIG. 4, and thus description thereof will be omitted.

While steps 3 to 14 of FIG. 6 are performed (namely, while the CSFB procedure is performed), the UE 100 may perform handover of the PS service to WiFi. The procedure of handover from a 3GPP access network to a non-3GPP access network may be performed as exemplarily described in Embodiment 1.

In step 15 of FIG. 6, when the UE 100 completes handover of the PS service to WiFi, the UE 100 transmits a PS HO to WiFi Complete message to the SGSN 800. After completing handover of the PS service to WiFi, the UE 100 is provided with the PS service using the WLAN.

In step 16 of FIG. 6, the SGSN 800 having received the PS HO to WiFi Complete message transmits the PS HO to WiFi Complete message to the MME 400.

In step 17 of FIG. 6, the MME 400 sends a PS HO to WiFi Complete ACK message to the SGSN 800 in response.

The MME 400 having received the PS HO to WiFi Complete message from the SGSN 800 recognizes that the PS service has been handed over to WiFi although the UE Context Release Request message received in step 8 includes information indicating that the PS service is not available to the UE on the target RAT (e.g., GERAN).

In step 18 of FIG. 6, the MME 400 transmits the PS HO to WiFi Complete message to the S-GW 600. Thereby, the S-GW 600 recognizes that the PS service has been handed over to WiFi.

In step 19 of FIG. 6 the S-GW 600 transmits the PS HO to WiFi Complete message to the P-GW 700. Thereby, the P-GW 700 recognizes that the PS service has been handed over to WiFi.

In step 20 of FIG. 6, the P-GW 700 sends a PS HO to WiFi Complete ACK message to the S-GW 600 in response.

In step 21 of FIG. 6, the S-GW 600 sends the PS HO to WiFi Complete ACK message to the MME 400 in response.

In step 22 of FIG. 6, if the UE 100 does not initiate LAU, the UE 100 transmits a Paging Response message. The Paging Response message may be transmitted to the MSC 500 via the BSS/RNS 300. Step 22 of FIG. 6 may be transmitted between steps 14 and 15.

Steps 23 to 25 of FIG. 6 are the same as steps 24 to 26 of FIG. 4, and thus description thereof will be omitted.

When CS call setup is completed, the UE 100 may perform a voice call (i.e., voice communication) and at the same time be provided with the PS service using the WLAN.

In the example illustrated in FIG. 6, when the CSFB procedure begins (or when the UE 100 recognizes that the CSFB procedure begins, or initiates the CSFB procedure), the UE 100 may recognize that the PS service will be suspended (or PS HO to a target RAT of CSFB will not be supported/performed) due to CSFB in step 3. When the UE 100 recognizes presence of available WiFi (or accessible WiFi), the UE initiates handover of the PS service to WiFi.

In the case in which the UE 100 recognizes that that the PS service will be suspended (or PS HO will not be supported/performed by the target RAT of CSFB) due to CSFB from the information received from the network during the CSFB procedure and recognizes presence of available WiFi (or accessible WiFi), the UE 100 may initiate handover of the PS service provided on the E-UTRAN to WiFi after steps 7a/7b/7c. At this time, the UE 100 may transmit, to the MME 400, a message containing information for notifying that handover of the PS service to WiFi is selectively performed. To this end, the conventionally defined NAS message may be used, or a new message may be defined and used.

The details of the various methods and/or embodiments of the present invention described above may be independently applied to a method for handover of a PS service between a 3GPP access network and a non-3GPP access network (e.g., a WLAN), or two or more methods and/or embodiments may be combined and simultaneously applied to the handover method.

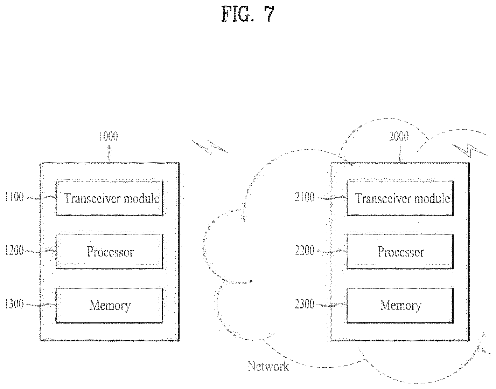

FIG. 7 is a diagram illustrating configuration of a user equipment and a network node apparatus according to a preferred embodiment of the present invention.

Referring to FIG. 7, a UE 1000 may include a transceiver module 1100, a processor 1200, and a memory 1300. The transceiver module 1100 may be configured to transmit and receive various signals, data, and information from/to an external device. The UE 1000 may be connected to an external device by wire and/or wirelessly. The processor 1200 may control overall operations of the UE 1000, and may function to operationally process information to be transmitted and received between the UE 1000 and the external device. Moreover, the processor 1200 may be configured to perform the UE operation proposed in the present invention. The memory 1300, which may be replaced with an element such as a buffer (not shown), may store the processed information for a predetermined time.

Referring to FIG. 7, a network node apparatus 2000 according to the present invention may include a transceiver module 2100, a processor 2200, and a memory 2300. The transceiver module 2100 may be configured to transmit and receive various signals, data, and information to/from an external device. The network node apparatus 2000 may be connected to an external device by wire and/or wirelessly. The processor 2200 may control overall operations of the network node apparatus 2000, and may function to operationally process information to be transmitted and received between the network node apparatus 2000 and the external device. Moreover, the processor 2200 may be configured to perform the network node operation proposed in the present invention. The memory 2300, which may be replaced with an element such as a buffer (not shown), may store the processed information for a predetermined time.

The specific configuration of the UE 1000 and the network apparatus 2000 may be implemented such that the various methods and/or the details of the embodiments of the present invention described above are independently applied or two or more of the methods and/or embodiments are combined and simultaneously applied. For clarity, redundant description of the details will be omitted.

The embodiments of the present invention described above may be implemented through various means, for example, hardware, firmware, software, or a combination thereof.

When implemented by hardware, a method according to embodiments of the present invention may be implemented by one or more application specific integrated circuits (ASICs), one or more digital signal processors (DSPs), one or more digital signal processing devices (DSPDs), one or more programmable logic devices (PLDs), one or more field programmable gate arrays (FPGAs), a processor, a controller, a microcontroller, a microprocessor, etc.

When implemented by firmware or software, a method according to embodiments of the present invention may be implemented in the form of a module, a procedure, or a function that performs the functions or operations described above. Software code may be stored in a memory unit and executed by a processor. The memory unit is located at the interior or exterior of the processor and may transmit and receive data to and from the processor via various known means.

Preferred embodiments of the present invention have been described in detail above to allow those skilled in the art to implement and practice the present invention.

### [Industrial Applicability]

The embodiments of the present invention as described above are applicable to various mobile communication systems.

## Claims

1. A method for handover of at least one packet switched, PS, service to wireless local access network, WLAN, if PS service would be suspended due to circuit switched fallback, CSFB, comprising:
when determining by a user equipment, UE, (100, 1000) that camps on a first access network of an evolved packet system, EPS, and initiates execution of CSFB from the first access network to a target radio access technology, RAT, that the target RAT does not support handover of the PS service and WLAN is available, transmitting, from the UE, to a Mobility Management Entity, MME, (400, 2000) of the EPS, an extended service request message comprising information notifying that the PS service is selectively subjected to handover to WLAN;
upon receipt of the extended service request message, initiating, by the MME (400, 2000), a timer, which, upon expiry, causes the MME (400, 2000) to suspend the PS service;
performing by the UE (100, 1000), at the same time, CSFB and handover of the PS service to WLAN;
upon successful completion of the handover, while still camping on the first access network, transmitting by the UE (100, 1000) a message to the MME (400, 2000) including information indicating completion of the handover of the PS service to WLAN;
upon receipt of the message by the MME (400, 2000) before expiry of the timer, the MME (400, 2000) informs at least one node of the EPS core network of the completion of the handover of the PS service to WLAN.

2. The method according to claim 1, wherein it is determined, based on whether or not the UE (100, 1000) supports a dual transfer mode, DTM, that the handover to the target RAT of the CSFB is not supported for the at least one PS service by the CSFB.

3. The method according to claim 1, wherein:
a target RAT of the CSFB is a Global System for Mobile Communication, GSM, / Enhanced Data rates for Global Evolution, EDGE, radio access network, GERAN, or a UTMS terrestrial radio access network, UTRAN, the target RAT being a RAT changed due to the CSFB.

4. The method according to claim 1, wherein the CSFB is CSFB to a Global System for Mobile Communication, GSM, / Enhanced Data rates for Global Evolution, EDGE, radio access network, GERAN, or to a UMTS terrestrial radio access network, UTRAN, the GERAN not supporting dual transfer mode, DTM, and the UTRAN not supporting the handover of the PS service.

5. A system for handover of at least one packet switched, PS, service to wireless local access network, WLAN, if PS service would be suspended due to circuit switched fallback, CSFB, the system comprising a user equipment, UE, (100, 1000) that camps on a first access network of an evolved packet system, EPS, and a Mobility Management Entity, MME (400, 2000), of the EPS:
wherein the UE (100, 1000) comprises a transceiver module (1100) and
a processor (1200);
wherein the MME (400, 2000) comprises a transceiver module (2100) and
a processor (2200);
wherein, when the UE (100, 100) initiates execution of CSFB from the first access network to a target radio access technology, RAT, the processor (1200) of the UE (100, 100) is configured to, when determining that the target RAT does not support handover of the PS service and WLAN is available, transmit, to the MME (400, 2000), an extended service request message comprising information notifying that the PS service is selectively subjected to handover to WLAN;
wherein the processor (2200) of the MME (400, 2000) is configured to, upon receipt of the extended service request message, initiate a timer, which, upon expiry, causes the processor (2200) of the MME (400, 2000) to suspend the PS service;
wherein the processor (1200) of the UE (100, 100) is configured to perform, at the same time, CSFB and handover of the PS service to WLAN, and to, upon successful completion of the handover, while still camping on the first access network, transmit a message to the MME (400, 2000) including information indicating completion of the handover of the PS service to WLAN;
wherein the processor (2200) of the MME (400, 2000) is configured to, upon receipt of the message by the MME (400, 2000) before expiry of the timer, inform at least one node of the EPS core network of the completion of the handover of the PS service to WLAN.

## Patentansprüche

1. Verfahren zur Übergabe von wenigstens einem paketvermittelten, PS, Dienst an ein drahtloses lokales Zugriffsnetz, WLAN, wenn der PS-Dienst aufgrund eines leitungsvermittelten Rückgriffs, CSFB, unterbrochen ist, umfassend:
wenn durch ein Teilnehmergerät, UE, (100, 1000), das auf einem ersten Zugriffsnetz eines entwickelten Paketsystems, EPS, wartet und ein Ausführen eines CSFB von dem ersten Zugriffsnetz auf eine Ziel-Funkzugriffstechnologie, RAT, einleitet, bestimmt wird, dass die Ziel-RAT die Übergabe des PS-Dienstes nicht unterstützt und WLAN verfügbar ist, Senden, von dem UE an eine Mobilitätsverwaltungseinheit, MME, (400, 2000) des EPS, einer erweiterten Dienstanfragenachricht, die eine Information umfasst, die ankündigt, dass der PS-Dienst selektiv einer Übergabe an ein WLAN unterzogen wird;
bei Empfang der erweiterten Dienstanfragenachricht, Einleiten, durch die MME (400, 2000), eines Zeitgebers, der bei Ablauf verursacht, dass die MME (400, 2000) den PS-Dienst unterbricht;
Durchführen durch das UE (100, 1000), zur gleichen Zeit, eines CSFB und einer Übergabe des PS-Dienstes an ein WLAN;
bei erfolgreicher Fertigstellung der Übergabe, während noch auf dem ersten Zugriffsnetz gewartet wird, Senden durch das UE (100, 1000) einer Nachricht an die MME (400, 2000), die eine Information einschließt, die eine Fertigstellung der Übergabe des PS-Dienstes an ein WLAN anzeigt;
wobei bei Empfang der Nachricht durch die MME (400, 2000) vor Ablauf des Zeitgebers die MME (400, 2000) wenigstens einen Knoten des EPS-Kernnetzes über die Fertigstellung der Übergabe des PS-Dienstes an ein WLAN informiert.

2. Verfahren nach Anspruch 1, wobei basierend darauf, ob das UE (100, 1000) einen doppelten Übertragungsmodus, DTM, unterstützt oder nicht, bestimmt wird, dass die Übergabe an die Ziel-RAT des CSFB für den wenigstens einen PS-Dienst durch den CSFB nicht unterstützt wird.

3. Verfahren nach Anspruch 1, wobei:
eine Ziel-RAT des CSFB ein Globales System für Mobile Kommunikation-, GSM-/ erhöhte Datenübertragungsraten für Globale Evolution-, EDGE-, Funkzugriffsnetz, GERAN, oder ein UTMS terrestrisches Funkzugriffsnetz, UTRAN, ist, wobei die Ziel-RAT eine aufgrund des CSFB geänderte RAT ist.

4. Verfahren nach Anspruch 1, wobei der CSFB ein CSFB auf ein Globales System für Mobile Kommunikation-, GSM-, / erhöhte Datenübertragungsraten für Globale Evolution-, EDGE-, Funkzugriffsnetz, GERAN, oder ein UMTS terrestrisches Funkzugriffsnetz, UTRAN, ist, wobei das GERAN den doppelten Übertragungsmodus, DTM, nicht unterstützt und das UTRAN die Übergabe des PS-Dienstes nicht unterstützt.

5. System zur Übergabe von wenigstens einem paketvermittelten, PS, Dienst an ein drahtloses lokales Zugriffsnetz, WLAN, wenn der PS-Dienst aufgrund eines leitungsvermittelten Rückgriffs, CSFB, unterbrochen ist, wobei das System ein Teilnehmergerät, UE, (100, 1000) umfasst, das auf einem ersten Zugriffsnetz eines entwickelten Paketsystems, EPS, wartet, und eine Mobilitätsverwaltungseinheit, MME (400, 2000), des EPS:
wobei das UE (100, 1000) ein Sender-Empfänger-Modul (1100) und einen Prozessor (1200) umfasst;
wobei die MME (400, 2000) ein Sender-Empfänger-Modul (2100) und einen Prozessor (2200) umfasst;
wobei, wenn das UE (100, 1000) ein Ausführen eines CSFB von dem ersten Zugriffsnetz auf eine Ziel-Funkzugriffstechnologie, RAT, einleitet, der Prozessor (1200) des UE (100, 1000) dazu ausgestaltet ist, wenn bestimmt wird, dass die Ziel-RAT die Übergabe des PS-Dienstes nicht unterstützt und WLAN verfügbar ist, an die MME (400, 2000) eine erweiterte Dienstanfragenachricht zu senden, die eine Information umfasst, die ankündigt, dass der PS-Dienst selektiv einer Übergabe an ein WLAN unterzogen wird;
wobei der Prozessor (2200) der MME (400, 2000) dazu ausgestaltet ist, bei Empfang der erweiterten Dienstanfragenachricht, einen Zeitgeber einzuleiten, der bei Ablauf verursacht, dass der Prozessor (2200) der MME (400, 2000) den PS-Dienst unterbricht;
wobei der Prozessor (1200) des UE (100, 1000) dazu ausgestaltet ist, zur gleichen Zeit, einen CSFB und eine Übergabe des PS-Dienstes an ein WLAN durchzuführen und bei erfolgreicher Fertigstellung der Übergabe, während noch auf dem ersten Zugriffsnetz gewartet wird, eine Nachricht an die MME (400, 2000) zu senden, die eine Information einschließt, die eine Fertigstellung der Übergabe des PS-Dienstes an ein WLAN anzeigt;
wobei der Prozessor (2200) der MME (400, 2000) dazu ausgestaltet ist, bei Empfang der Nachricht durch die MME (400, 2000) vor Ablauf des Zeitgebers, wenigstens einen Knoten des EPS-Kernnetzes über die Fertigstellung der Übergabe des PS-Dienstes an ein WLAN zu informieren.

## Revendications

1. Procédé pour le transfert intercellulaire d'au moins un service à commutation de paquets, PS, vers un réseau d'accès local sans fil, WLAN, en cas de suspension de service PS en raison d'un repli à commutation de circuits, CSFB, comprenant :
lors de la détermination, par un équipement utilisateur, UE, (100, 1000) qui campe sur un premier réseau d'accès d'un système de paquets évolué, EPS, et initie l'exécution d'un CSFB du premier réseau d'accès à une technologie d'accès radio, RAT, cible, du fait que la RAT cible ne prend pas en charge un transfert intercellulaire du service PS et du fait que le WLAN est disponible, émettre, à partir de l'UE, à une entité de gestion de mobilité, MME, (400, 2000) de l'EPS, un message de requête de service étendu comprenant des informations notifiant que le service PS est soumis de manière sélective à un transfert intercellulaire vers le WLAN ;
lors de la réception du message de requête de service étendu, initier, par la MME (400, 2000), un temporisateur qui, après l'expiration, amène la MME (400, 2000) à suspendre le service PS ;
réaliser par l'UE (100, 1000), en même temps, un CSFB et un transfert intercellulaire du service PS vers le WLAN ;
lors de l'achèvement réussi du transfert intercellulaire, tout en campant toujours sur le premier réseau d'accès, émettre par l'UE (100, 1000) un message à la MME (400, 2000) comprenant des informations indiquant l'achèvement du transfert intercellulaire du service PS vers le WLAN ;
lors de la réception du message par la MME (400, 2000) avant l'expiration du temporisateur, la MME (400, 2000) informe au moins un noeud du réseau central d'EPS de l'achèvement du transfert intercellulaire du service PS vers le WLAN.

2. Procédé selon la revendication 1, dans lequel il est déterminé, sur la base du point de savoir si l'UE (100, 1000) prend ou non en charge un double mode de transfert, DTM, que le transfert intercellulaire vers la RAT cible du CSFB n'est pas pris en charge pour l'au moins un service PS par le CSFB.

3. Procédé selon la revendication 1, dans lequel :
une RAT cible du CSFB est un réseau d'accès radio de système mondial de communication avec les mobiles, GSM, /taux de données améliorées pour l'évolution globale, EDGE, GERAN, ou un réseau d'accès radio terrestre UTMS, UTRAN, la RAT cible étant une RAT modifiée en raison du CSFB.

4. Procédé selon la revendication 1, dans lequel le CSFB est un CSFB sur un réseau d'accès radio de système mondial de communication avec les mobiles, GSM, /taux de données améliorées pour l'évolution globale, EDGE, GERAN, ou sur un réseau d'accès radio terrestre UTMS, UTRAN, le GERAN ne prenant pas en charge un double mode de transfert, DTM, et l'UTRAN ne prenant pas en charge le transfert intercellulaire du service PS.

5. Système pour le transfert intercellulaire d'au moins un service à commutation de paquets, PS, vers un réseau d'accès local sans fil, WLAN, en cas de suspension de service PS en raison d'un repli à commutation de circuits, CSFB, le système comprenant un équipement utilisateur, UE, (100, 1000) qui campe sur un premier réseau d'accès d'un système de paquets évolué, EPS, et une entité de gestion de mobilité, MME, (400, 2000), de l'EPS :
l'UE (100, 1000) comprenant un module d'émetteur-récepteur (1100) et un processeur (1200) ;
la MME (400, 2000) comprenant un module d'émetteur-récepteur (2100) et un processeur (2200) ;
lorsque l'UE (100, 100) initie l'exécution d'un CSFB du premier réseau d'accès à une technologie d'accès radio, RAT, cible, le processeur (1200) de l'UE (100, 100) étant configuré pour, lors de la détermination du fait que la RAT cible ne prend pas en charge un transfert intercellulaire du service PS et du fait que le WLAN est disponible, émettre, à la MME (400, 2000), un message de requête de service étendu comprenant des informations notifiant que le service PS est soumis de manière sélective à un transfert intercellulaire vers le WLAN ;
le processeur (2200) de la MME (400, 2000) étant configuré pour, lors de la réception du message de requête de service étendu, initier un temporisateur qui, après l'expiration, amène le processeur (2200) de la MME (400, 2000) à suspendre le service PS ;
le processeur (1200) de l'UE (100, 100) étant configuré pour réaliser, en même temps, un CSFB et un transfert intercellulaire du service PS vers le WLAN, et pour, lors de l'achèvement réussi du transfert intercellulaire, tout en campant toujours sur le premier réseau d'accès, émettre un message à la MME (400, 2000) comprenant des informations indiquant l'achèvement du transfert intercellulaire du service PS vers le WLAN ;
le processeur (2200) de la MME (400, 2000) étant configuré pour, lors de la réception du message par la MME (400, 2000) avant l'expiration du temporisateur, informer au moins un noeud du réseau central d'EPS de l'achèvement du transfert Intercellulaire du service PS vers le WLAN.
